# EUROPÄISCHE PATENTSCHRIFT

(11) **EP 4 149 827 B1**
(45) Veröffentlichungstag und Bekanntmachung des Hinweises auf die Patenterteilung: **08.07.2026**
(21) Anmeldenummer: 21745891.8
(22) Anmeldetag: 12.05.2021
(51) Int. Cl.: B62J 7/06, B62J 9/21, B62J 7/08, B62J 9/24, B62J 9/27

(54) **FIXIER- UND ARRETIERUNGSSYSTEM**
FIXING AND LOCKING SYSTEM
SYSTÈME DE FIXATION ET D'ARRÊT

(30) Priorität: 16.05.2020 DE 202020002184 U
(43) Veröffentlichungstag der Anmeldung: 22.03.2023
(73) Patentinhaber: Ortlieb Sportartikel GmbH, 91560 Heilsbronn (DE)
(72) Erfinder: ORTLIEB, Hartmut, 91560 Heilsbronn (DE)
(74) Vertreter: Dorn, Dietmar
(86) Internationale Anmeldenummer: PCT/DE2021/000091
(87) Internationale Veröffentlichungsnummer: WO 2021/233489

(56) Entgegenhaltungen:
- EP-A1- 0 477 010
- EP-A2- 2 552 768
- MATT MILLER: "Gadgetry and Accessories of Interbike 2018 - Singletracks Mountain Bike News", SINGLETRACKS.COM, 27 September 2018 (2018-09-27), XP055845818, Retrieved from the Internet <URL:https://www.singletracks.com/mtb-gear/gadgetry-and-accessories-of-interbike/> [retrieved on 20210929]
- LOGAN WATTS: "Salsa Anything Cage HD Review - BIKEPACKING.com", BIKEPACKING.COM, 11 March 2015 (2015-03-11), XP055845811, Retrieved from the Internet <URL:https://bikepacking.com/gear/salsa-anything-cage-hd-anything-bag/> [retrieved on 20210929]

## Beschreibung

Die vorliegende Erfindung betrifft ein Fixier- und Arretierungssystem zur Anbringung einer Tasche an einem Fahrrad, insbesondere zur Anbringung einer Tasche an einem Stangen-, oder Rohrelement insbesondere an einem Fahrrad, wie an einem Gabelrohr oder der Lenkerstange.

Zum Mitführen von Behältnissen wie Taschen, Koffer, Rucksäcke oder dergleichen an einem Zweirad oder allgemein an einem Träger sind verschiedene Systeme bekannt um Taschen oder andere Behältnisse an Teilen des Fahrrads zu montieren um diese mitzuführen.

Das Dokument XP055845818 offenbart zum Beispiel ein Fixier- und Arretierungssystem mit allen Merkmalen des Oberbegriffs des unabhängigen Anspruchs 1.

Die Befestigung von Taschen und Behältnissen an Fahrrädern ist durch verschiedene Produkte und Ausführungsvarianten bekannt. Meist werden Taschen und Behältnisse in verschiedenen Größen an Gepäckträgern, am Fahrradrahmen oder an der Lenkstange befestigt. In letzter Zeit hat sich eine besondere Art der Nutzung eines Fahrrads etabliert, das sogenannte Bikepacking. Hierbei werden lange Strecken auch über mehrere Tage auf weniger ebenen Wegen bis hin zu schmalen Pfaden in unwegsamem Gelände zurückgelegt. Hierfür eignen sich die herkömmlichen Gepäcksysteme für Fahrräder weniger gut, da ausladende Taschen an den Seiten der Gepäckträger z.B. mit Felsen oder Büschen oder anderen Hindernissen kollidieren würden. Die Anwender im Bikepacking-Bereich versuchen, ihr notwendiges Gepäck möglichst am ganzen Rad verteilt zu befestigen, denn so bleibt das Rad trotz des Zusatzgewichts relativ agil und behält eine schlanke Form, mit der man weniger an Hindernissen hängen bleibt.

Für das Bikepacking sind eine Vielzahl spezieller Taschen auf dem Markt, die man an den verschiedensten Stellen am Rad befestigen kann. Auch an der Fahrradgabel können kleine Taschen oder Behältnisse befestigt werden, wahlweise beidseitig des Rads oder einseitig. Durch die niedrige Position des zusätzlichen Gewichts an dieser Stelle des Fahrrads werden die Fahreigenschaften nur unwesentlich verschlechtert. Auch die Lenkbewegungen werden bei kleinen Taschen oder Behältern mit einem geringem Beladungsgewicht von maximal 2 kg kaum beeinträchtigt. Die Ansprüche an die Befestigung einer Tasche oder eines Behältnisses am Gabelrohr sind in mechanischer Hinsicht jedoch besonders hoch, da die Bodenunebenheiten und Lenkbewegungen während der Fahrt starke Erschütterungen und impulsive Beschleunigungskräfte bewirken, die auf die Tasche und ihr Befestigungssystem einwirken.

Die bekannten Taschensysteme zur Befestigung an Fahrradgabeln, die auf dem Markt verfügbar sind haben den Nachteil, dass sie umständlich am Gabelrohr befestigt werden müssen, nicht schnell abnehmbar sind (z.B. fest verschraubt) oder nicht sicher genug gegen seitliches Schwingen, Verrutschen oder Verdrehen gesichert sind. Des Weiteren ist das meist käfigartige Befestigungselement nach Entfernen der Tasche oftmals noch immer ausladend und optisch dominant, was das Fahren ohne Tasche unattraktiv bzw. bei wechselndem Verwendungszweck des Fahrrads ein häufiges An- und Demontieren des Befestigungselements erforderlich macht.

Aufgabe der vorliegenden Erfindung ist es daher, die genannten Nachteile zu vermindern und eine leicht und sicher an Rohrelementen wie am Gabelrohr oder Lenkerrohr anzubringende Lösung für das Mitführen von Taschen zu ermöglichen. Gleichzeitig soll die Tasche dabei einfach und schnell zu montieren und wieder abzunehmen sein.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Fixier- und Arretierungssystem zur Anbringung einer Tasche an einem Fahrrad, insbesondere zur Anbringung einer Tasche an einem Stangen-, oder Rohrelement an einem Fahrrad bei welchem wenigstens ein Befestigungselement an einem Stangen-, oder Rohrelement angebracht oder anbringbar ist und wenigstens ein Aufnahmeelement, welches an einer Tasche oder einem Behälter angebracht und mit dieser verbunden ist, wenigstens mit dem einen Befestigungselement reversibel arretierbar und fixierbar ausgeführt ist wobei das Befestigungselement als mittige Strebe oder Schiene mit jeweils endseitigen, vertikalen Abkragungen, mit wenigstens zwei in der Schiene übereinander angeordneten Fixierpunkten ausgebildet ist, mittels welchen das Befestigungselement fest an dem Stangen- oder Rohrelement anbringbar ist wobei das Rohrelement dafür vorgesehene Verbindungspunkte aufweist oder das Befestigungselement mittels, um das Rohrelement greifende, Verbindungselemente mit Verbindungspunkten, an diesem fixierbar ist und die Abkragungen in ihrem Verlauf und/oder endseitig mit an der oberen Abkragung angeordneten Haltevorrichtungen und an der unteren Abkragung angeordneten Führungseinrichtungen ausgebildet sind, welche für, mit dem Befestigungselement korrespondierende, an einer Tasche- oder einem Behältnis angebrachte Aufnahmeelemente, ausgebildet sind, wobei die Adapter Aufnahmeelemente an der Tasche mit den Adapter Haltevorrichtungen und Adapter Führungseinrichtungen an vier Eckpunkten lösbar miteinander verbindbar sind und wenigstens eine der Haltevorrichtungen mit einer Verriegelung ausgerüstet ist.

Die vorliegende Erfindung löst dabei die beschriebene Aufgabe. Es handelt sich bei dem Fixier- und Arretierungssystem im Wesentlichen um ein Befestigungselement mit zwei waagrechten Balken mit daran befindlichen Arretierungsgeometrien für die Tasche, die über ein senkrechtes Verbindungselement miteinander verbunden sind, welches die Fixiergeometrien für die Befestigung am Gabelrohr oder der Lenkerstange aufweist. Dieses Befestigungselement ist so klein wie möglich dimensioniert, um eine Tasche oder ein Behältnis mit bis zu 5 Litern noch schwingungsfrei zu halten, es wird dabei fest an dem Gabelrohr angebracht. Die dazugehörige Tasche besitzt auf ihrer Rückseite wiederum Arretierungselemente, die eine schnell lösbare Verbindung zum Befestigungselement ermöglicht. Dadurch kann die Tasche mit einem Handgriff entfernt werden und an der Gabel bleibt nur ein relativ kleines, leichtes und unscheinbares Teil zurück.

Die Arretierung der Tasche am Befestigungselement erfolgt über je zwei Verbindungspunkte an den Enden der beschriebenen zwei waagrechten Balken. Die Abstände dieser Verbindungspunkte liegen horizontal im Bereich von 40-130mm. Dieser Abstand ist erforderlich, um die auftretenden Torsionskräfte der beladenen Tasche mit den entsprechenden Abmessungen effektiv abzufangen.

Die Stabilität des Gesamtsystems hängt auch von der richtig ausgelegten Befestigung des senkrechten Verbindungselements am Gabelrohr ab. Dieses muss an den unterschiedlichen Ausführungen von Gabelrohren ausreichend fest angebracht werden können.

Einige sich im Markt befindlichen Fahrräder für die Verwendung für das Bikepacking weisen an ihren Vorderradgabeln bereits oftmals drei in einer geraden vertikalen Linie auf der dem Laufrad abgewandten Seite liegende M5 Gewindebuchsen auf, welche eine effektive Befestigungsmöglichkeit von Halteelementen für Taschen oder Trinkflaschen bieten. Die Abstände dieser Gewindebuchsen betragen je 64mm und werden von allen Herstellern in diesem Abstand verbaut. Das Befestigungselement für Taschen und Behältnisse in der vorliegenden Erfindung kann über diese Gewindebuchsen fest an der Gabel befestigt werden und weist hierfür entsprechende Verschraubungslöcher in ihrem senkrechten Verbindungselement auf.

Für Fahrradgabeln ohne nutzbare Gewindebuchsen kann ein bekanntes Bandzugsystem zur festen Anbringung verwendet werden. Das senkrechte Verbindungselement der Erfindung besitzt auch hierfür die erforderlichen Geometrien. Dabei werden bevorzugt wenigstens das obere und untere Verschraubungsloch benutzt. Diese beiden Verbindungspunkte liegen auf Höhe der beiden zuvor beschriebenen waagrechten Balken und übertragen die einwirkenden Kräfte von der Tasche über das Befestigungselement direkt auf das Gabelrohr.

Im Folgenden wird die Erfindung anhand von Zeichnungen beispielhaft näher beschrieben, dabei zeigen:
- Fig.1: eine perspektivische Ansicht auf ein Rohrelement mit angebrachtem Adapterteil für die Aufnahme einer Tasche.
- Fig. 2: eine Vorderansicht auf ein Rohrelement mit angebrachtem Adapterteil für die Aufnahme einer Tasche.
- Fig. 3: eine perspektivische Ansicht einer Tasche mit angebrachten Aufnahmeelementen zur korrespondierenden Verbindung.

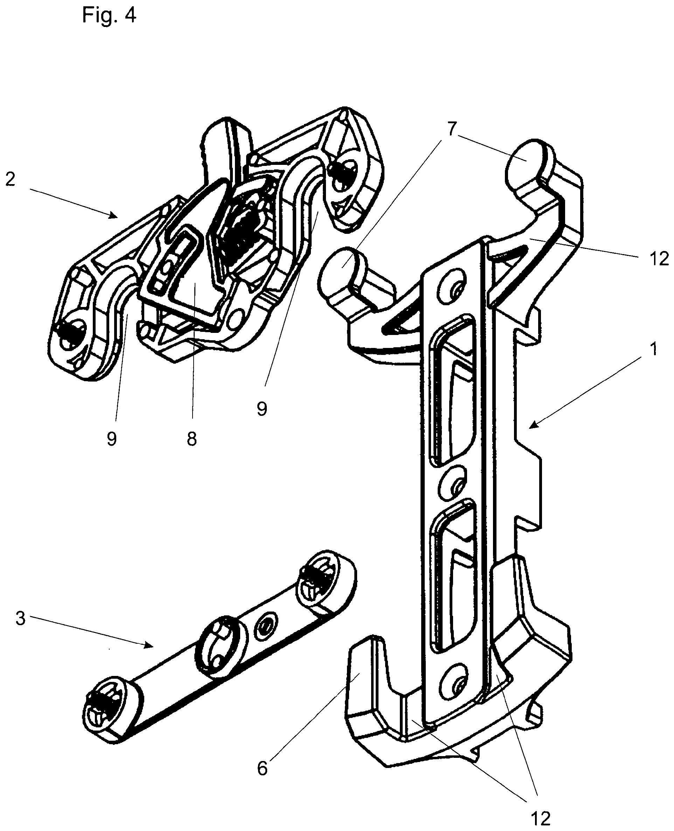

- Fig. 4: eine perspektivische Darstellung eines Adapterteils und der zugehörigen korrespondierenden Aufnahmeelemente zur Montage an der Tasche.
- Fig. 5: eine Vorderansicht des Adapterteils mit angedeuteter korrespondierender Verbindung der Aufnahmeelemente ohne Abbildung der Tasche.
- Fig. 6: eine Vorderansicht eines Adapterteils und der zugehörigen korrespondierenden Aufnahmeelemente zur Montage an der Tasche.

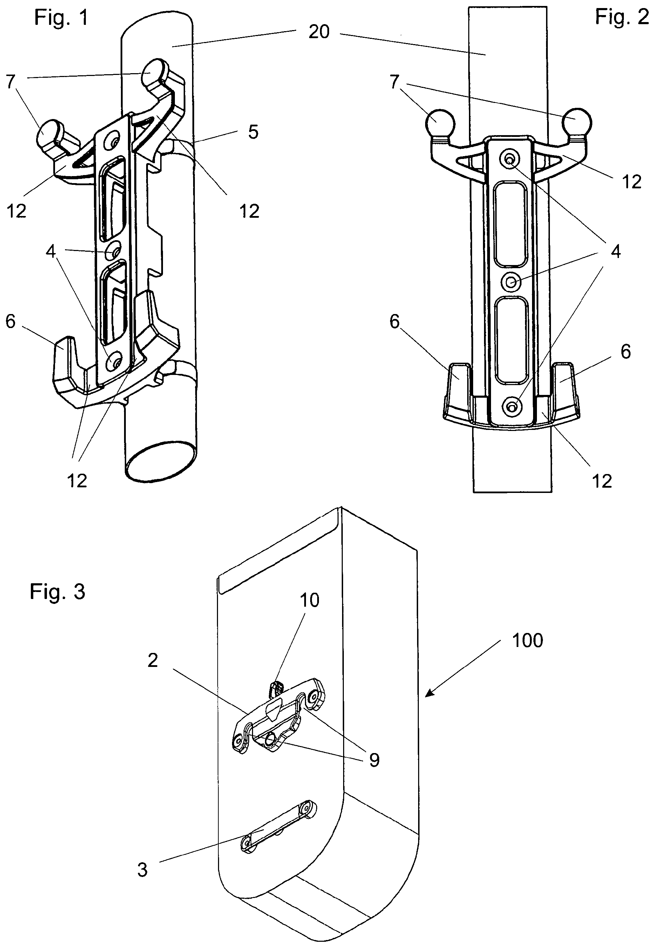

In Fig. 1 ist ein Adapterteil 1 eines erfindungsgemäßen Fixier- und/oder Arretierungssystems gezeigt, wobei der Adapterteil 1 an einem Stangen- oder Rohrelement 20 befestigt ist. In dieser gezeigten Variante ist das Adapterteil mittels Schellenelementen 5 mit entsprechendem Verbindungspunkt, beispielsweise einem Gewindeteil an den Schellenelemente mittels beispielsweise einer Verschraubung an den Punkten 4 des Adapterteils stabil befestigt. Wie in den Fig. 1 und Fig 2 sowie in den anderen Abbildungen zu sehen, ist das Adapterteil als eine, senkrecht, entlang dem Rohrelement verlaufende Strebe oder Schiene ausgebildet an deren Enden horizontale Abkragungen 12 angeordnet sind. An den sich seitlich erstreckenden Abkragungen befinden sich obere Haltevorrichtungen 7 und untere Führungseinrichtungen 6 welche zur Anbringung einer Tasche 100 mittels wenigstens einem korrespondierenden Aufnahmeelement 2, 3 geeignet sind.

Hierbei ist in einer, in den Figuren gezeigten Ausführung des Fixier- und/oder Arretierungssystems beispielsweise ein oberes 2 und ein unteres 3 Aufnahmeelement an einer Tasche 100 fest angebracht, alternativ kann auch ein einteiliges Aufnahmeelement, beispielsweise als Platte ausgebildet, mit entsprechend korrespondierenden oberen und unteren Ausgestaltung zum Einsatz kommen.

Eine Tasche 100 mit den an dieser angebrachten oberen und unteren Aufnahmeelementen 2, 3 ist in der Fig. 3 beispielhaft dargestellt. Die Tasche kann somit sehr einfach von oben in das, am Rohrelement 20, wie beispielsweise einer Fahrradgabel befestigte Adapterteil 1, eingeführt und befestigt werden. Dabei sorgen die vertikalen Streben 6 als unteres Aufnahmeelement für eine Führung in der unteren Führungseinrichtung 3 an der Tasche und die oberen Haltevorrichtungen 7 des Adapterteils 1 greifen in Nuten 9 des oberen Aufnahmeelements 2, welches an der Tasche angebracht ist, ein. Die oberen Haltevorrichtungen 7 des Adapterteils sind dabei als Pilz- förmige Enden mit einem größeren äußeren Durchmesser und einem verkleinerten Halsbereich ausgebildet. Hierdurch kann der kleinere Halsbereich in die Nut des oberen Aufnahmeelements eingeführt werden und ist durch den größeren äußeren Durchmesser der oberen Haltevorrichtung in dieser Nut gefangen gehalten. Zur Sicherung des unbeabsichtigten Herausfallen nach oben ist das obere Aufnahmeelement 2 mit einer Verriegelung 8 ausgerüstet, welche mittels einer entsprechenden Handhabe 10 lösbar ist. Die Verriegelung 8 ist dabei als ein Haken, welcher sich im aufgesetzten Zustand der Tasche an dem Adapterteil in die Nut 9 einschwenkt und den Hals der oberen Haltevorrichtung 7 in der Nut 9 gegen eine Bewegung aus der Nut 9 heraus, blockiert.

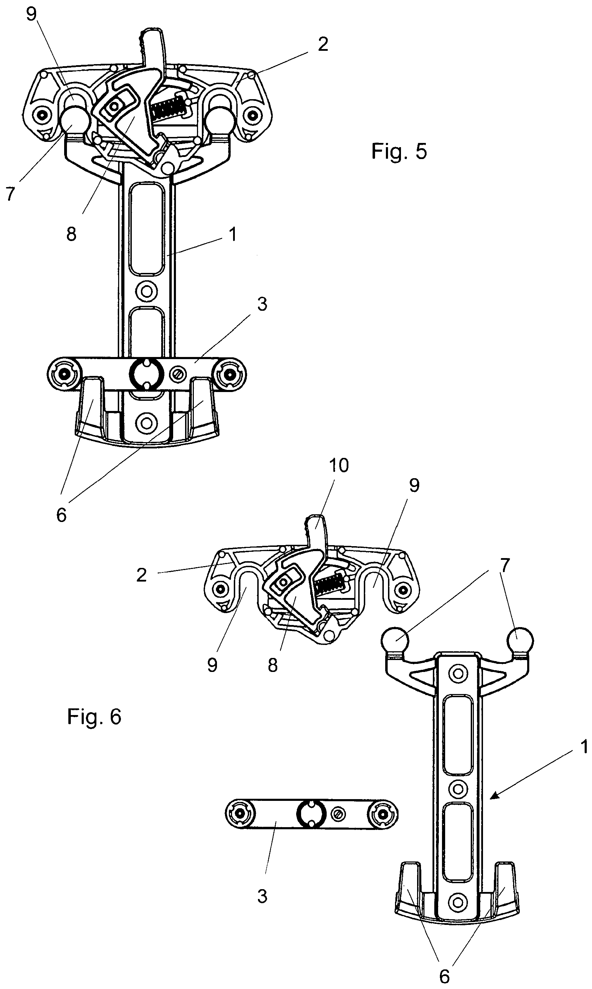

In einer bevorzugten Ausführung ist die Verriegelung mit einer Feder belastet und ein Lösen der Verbindung zwischen dem Aufnahmeelement 7 und der Nut 9 erfolgt an der Handhabe 10 gegen die eingesetzte Federkraft. Beim Einsetzen der Tasche in das Adapterteil wird der Feder belastete Haken 8 automatisch gegen die Federkraft weggedrückt und das Hakenelement 8 fährt aufgrund der Federbelastung in der Endposition der Haltevorrichtung 7 in der Nut 9 ein und blockiert diese, wie in der Fig. 5 beispielhaft dargestellt ist.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Fixier- und Arretierungssystem zur Anbringung einer Tasche an einem Fahrrad, insbesondere zur Anbringung einer Tasche (100) an einem Stangen-, oder Rohrelement (20) an einem Fahrrad bei welchem wenigstens ein Befestigungselement (1) an einem Stangen-, oder Rohrelement angebracht oder anbringbar ist und wenigstens ein Aufnahmeelement (2, 3), welches an einer Tasche oder einem Behälter angebracht und mit dieser verbunden ist, wenigstens mit dem einen Befestigungselement reversibel arretierbar und fixierbar ausgeführt ist,
wobei das Befestigungselement (1) als mittige Strebe oder Schiene mit jeweils endseitigen, horizontalen Abkragungen (12), mit wenigstens zwei in der Schiene übereinander angeordneten Fixierpunkten (4) ausgebildet ist, mittels welchen das Befestigungselement fest an dem Stangen- oder Rohrelement (20) anbringbar ist wobei das Rohrelement dafür vorgesehene Verbindungspunkte aufweist oder das Befestigungselement mittels, um das Rohrelement greifende, Verbindungselemente (5) mit Verbindungspunkten, an diesem fixierbar ist und die Abkragungen in ihrem Verlauf und/oder endseitig mit an der oberen Abkragung angeordneten Haltevorrichtungen (7) und an der unteren Abkragung angeordneten Führungseinrichtungen (6) ausgebildet sind, welche für, mit dem Befestigungselement (1) korrespondierende, an einer Tasche- oder einem Behältnis angebrachte Aufnahmeelemente (2, 3), ausgebildet sind, **dadurch gekennzeichnet, dass** die Adapter Aufnahmeelemente (2, 3) an der Tasche mit den Adapter Haltevorrichtungen (7) und Adapter Führungseinrichtungen (6) an vier Eckpunkten lösbar miteinander verbindbar sind und wenigstens eine der Haltevorrichtungen mit einer Verriegelung ausgerüstet ist.

2. Fixier- und/oder Arretierungssystem nach Anspruch 1,
**dadurch gekennzeichnet,**
**dass** die oberen und unteren Abkragungen (12) von der mittleren Schiene des Befestigungselements (1) jeweils zusammen oder einzeln Y- förmig abstehend ausgeführt sind.

3. Fixier- und/oder Arretierungssystem nach Anspruch 1,
**dadurch gekennzeichnet,**
**dass** der horizontale Abstand der oberen Haltevorrichtungen (7) und der horizontale Abstand der unteren Führungseinrichtungen (6) zwischen 40 bis 120mm beträgt.

4. Fixier- und/oder Arretierungssystem nach Anspruch 1,
**dadurch gekennzeichnet,**
**dass** der vertikale Abstand der oberen Haltevorrichtungen (7) zu den unteren Führungseinrichtungen (6) zwischen 80 bis 250mm beträgt.

5. Fixier- und/oder Arretierungssystem nach Anspruch 1,
**dadurch gekennzeichnet,**
**dass** das wenigstens eine, an der Tasche oder dem Behältnis (100) angebrachte Aufnahmeelement (2, 3) an der Taschenrückseite angebracht ist und von dieser Fläche leicht absteht und einen Raum für das Eingreifen der wenigstens einen Führungseinrichtung (6) des Befestigungselements (1) aufweist.

6. Fixier- und/oder Arretierungssystem nach Anspruch 1,
**dadurch gekennzeichnet,**
**dass** das Stangen- oder Rohrelement (20) jeweils ein Gabelrohr oder ein Lenkerrohr eines Fahrzeuges, insbesondere eines Zweirades ist.

7. Fixier- und/oder Arretierungssystem nach Anspruch 1,
**dadurch gekennzeichnet,**
**dass** das Befestigungselement (1) mit zwei Zungen- artigen, unteren Führungslaschen (6) ausgerüstet ist, welche beim Anbringen der Tasche (100) in den Raum zwischen der Taschenrückseite und dem unteren, Aufnahmeelement (3) greifen.

8. Fixier- und/oder Arretierungssystem nach Anspruch 1,
**dadurch gekennzeichnet,**
**dass** das Befestigungselement (1) mit zwei Pilz- artigen, oberen Haltevorrichtungspunkten (7) ausgerüstet ist, welche beim Anbringen der Tasche (100) in Schlitze (9) des oberen Aufnahmeelements (2) an der Tasche einfahren.

9. Fixier- und/oder Arretierungssystem nach Anspruch 1 und 8,
**dadurch gekennzeichnet,**
**dass** das obere, an der Tasche angeordnete Aufnahmeelement (2) mit einer lösbaren Verriegelung (8) ausgerüstet ist, welche im eingeführten Zustand des Pilz- förmigen Haltepunkts (7) im Schlitz (9), das Herausgleiten aus diesem verhindert.

10. Verriegelung eines Fixier- und/oder Arretierungssystem nach Anspruch 9,
**dadurch gekennzeichnet,**
**dass** der Mechanismus der Verriegelung federbelastet ausgeführt ist.

11. Fixier- und/oder Arretierungssystem nach Anspruch 1, 9 und 10
**dadurch gekennzeichnet,**
**dass** die Verriegelung des oberen Aufnahmeelements (3) mit einer Handhabe (10) zum lösen der Verriegelung ausgerüstet ist.

12. Fixier- und/oder Arretierungssystem nach Anspruch 1,
**dadurch gekennzeichnet,**
**dass** die um das Rohrelement greifenden Verbindungselemente als Schellenelemente (5) mit einem korrespondierenden Punkt für die Verbindung mittels des Fixierpunkts (4) des Befestigungselement (1) ausgebildet sind.

13. Fixier- und/oder Arretierungssystem nach Anspruch 1 und 12,
**dadurch gekennzeichnet,**
**dass** das Befestigungselement (1) auf seiner, dem Stangen- oder Rohrelement (20) zugewandten Seite mit einer Aufnahmevertiefung (11) für einen Schraub- oder Klemmkopf des Schellenelements (5) ausgebildet ist.

## Claims

1. A fixing and locking system for securing a pannier to a bicycle, in particular for securing a pannier (100) to a rod or tubular element (20) on a bicycle, in which at least one fastening element (1) is secured or securable to a rod or tubular element, and at least one receiving element (2, 3) secured to a pannier or a container and connected with the latter is designed so that it can be reversibly locked and fixed at least with the one fastening element,
wherein
the fastening element (1) is designed as a central strut or rail with respective end-side, horizontal cantilevers (12), with at least two fixing points (4) arranged one above the other in the rail, by means of which the fastening element can be securely attached to the rod or tubular element (20),
wherein the tubular element has connecting points provided for this purpose, or the fastening element can be fixed to the tubular element by means of connecting elements (5) with connecting points that engage around the tubular element, and the cantilevers are designed over their progression or at their ends with holding devices (7) arranged on their upper cantilever and guiding devices (6) arranged on their lower cantilever, which are designed for receiving elements (2, 3) corresponding with the fastening element (1) and secured to a pannier or a container, **characterized in that**
the adapter receiving elements (2, 3) on the pannier can be detachably connected with each other with the holding device (7) adapter and guiding device (6) adapter at four corner points, and at least one of the holding devices is equipped with a lock.

2. The fixing and/or locking system according to claim 1,
**characterized in that**
the upper and lower cantilevers (12) are designed so as to protrude from the middle rail of the fastening element (1), either together or individually in a Y-shape.

3. The fixing and/or locking system according to claim 1,
**characterized in that**
the horizontal distance of the upper holding devices (7) and the horizontal distance of the lower guiding devices (6) measures between 40 and 120 mm.

4. The fixing and/or locking system according to claim 1,
**characterized in that**
the vertical distance of the upper holding devices (7) to the lower guiding devices (6) measures between 80 and 250 mm.

5. The fixing and/or locking system according to claim 1,
**characterized in that**
the at least one receiving element (2, 3) secured to the pannier or the container (100) is secured to the back of the pannier, and slightly protrudes from this surface, and has a space for the at least one guiding device (6) of the fastening element (1) to engage into.

6. The fixing and/or locking system according to claim 1,
**characterized in that**
the rod or tubular element (20) is a respective fork tube or a handlebar tube of a vehicle, in particular a bicycle.

7. The fixing and/or locking system according to claim 1,
**characterized in that**
the fastening element (1) is equipped with two tongue-like, lower guide tabs (6), which engage into the space between the rear pannier side and the lower receiving element (3) while securing the pannier (100).

8. The fixing and/or locking system according to claim 1,
**characterized in that**
the fastening element (1) is equipped with two mushroom-like, upper holding device points (7), which engage into slits (9) of the upper receiving element (2) on the pannier while securing the pannier (100).

9. The fixing and/or locking system according to claim 1 and 8,
**characterized in that**
the upper receiving element (2) arranged on the pannier is equipped with a detachable lock (8), which prevents any sliding out of the slit (9) with the mushroom-like holding point (7) introduced therein.

10. The fixing and/or locking system according to claim 9,
**characterized in that**
the locking mechanism is spring-loaded in design.

11. The fixing and/or locking system according to claim 1, 9 and 10,
**characterized in that**
the lock of the upper receiving element (3) is equipped with a handle (10) for releasing the lock.

12. The fixing and/or locking system according to claim 1,
**characterized in that**
the connecting elements engaging around the tubular element are designed as clamp elements (5) with a corresponding point for connection by means of the fixing point (4) of the fastening element (1).

13. The fixing and/or locking system according to claim 1 and 12,
**characterized in that**
the side of the fastening element (1) facing the rod or tubular element (20) is designed with a recess (1) for a screw or clamp head of the clamp element (5).

## Revendications

1. Système de fixation et de blocage pour le montage d'une sacoche sur une bicyclette, en particulier pour le montage d'une sacoche (100) sur un élément à barre ou à tube (20) sur une bicyclette pour lequel au moins un élément de fixation (1) est monté, ou peut être monté, sur un élément à barre ou à tube et au moins un élément de réception (2, 3), lequel est monté sur une sacoche ou un contenant et est relié à celui-ci, est au moins réalisé pouvant être bloqué et fixé de façon réversible avec l'élément de fixation,
sachant que
l'élément de fixation (1) est constitué sous la forme de montant ou rail central avec respectivement des encolures en saillie horizontales en extrémité (12), avec au moins deux points de fixation (4) disposés l'un sur l'autre dans le rail, au moyen desquels l'élément de fixation peut être fermement monté sur l'élément à barre ou à tube (20),
sachant que l'élément à tube comporte des points de liaison prévus à cet effet ou l'élément de fixation peut être fixé à celui-ci au moyen des éléments de liaison (5) avec points de liaison, venant en prise autour de l'élément à tube et les encolures en saillie sont constituées dans leur profil et/ou en extrémité avec des systèmes de retenue (7) disposés sur l'encolure en saillie supérieure et des systèmes de guidage (6) disposés sur l'encolure en saillie inférieure, lesquels sont constitués pour des éléments de réception (2, 3) correspondants à l'élément de fixation (1), montés sur une sacoche ou un contenant, **caractérisé en ce que** les éléments de réception d'adaptation (2, 3) peuvent être reliés entre eux de façon amovible aux quatre points d'angle avec les dispositifs de retenue d'adaptation (7) et les systèmes de guidage d'adaptation (6) et au moins un des dispositifs de retenue est équipé d'un verrouillage.

2. Système de fixation et/ou de blocage selon la revendication 1,
**caractérisé en ce que**
les encolures en saillie supérieures et inférieures (12) du rail central de l'élément de fixation (1) sont réalisées respectivement ensemble ou individuellement faisant saillie en forme d'Y.

3. Système de fixation et/ou de blocage selon la revendication 1,
**caractérisé en ce que**
la distance horizontale des dispositifs de retenue supérieurs (7) et la distance horizontale des systèmes de guidages inférieurs (6) vont de 40 à 120 mm.

4. Système de fixation et/ou de blocage selon la revendication 1,
**caractérisé en ce que**
la distance verticale des dispositifs de retenue supérieurs (7) aux systèmes de guidage inférieurs (6) est de 80 à 250 mm.

5. Système de fixation et/ou de blocage selon la revendication 1,
**caractérisé en ce qu'**
au moins un élément de réception (2, 3) monté sur la sacoche ou le contenant (100) est monté sur le côté arrière de sacoche et dépasse légèrement de cette surface et comporte un espace pour l'engagement d'au moins un système de guidage (6) de l'élément de fixation (1).

6. Système de fixation et/ou de blocage selon la revendication 1,
**caractérisé en ce que**
l'élément à barre ou à tube (20) est respectivement un tube de fourche ou un tube de guidon d'un véhicule, en particulier d'un deux-roues.

7. Système de fixation et/ou de blocage selon la revendication 1,
**caractérisé en ce que**
l'élément de fixation (1) est doté de deux pattes de guidage (6) inférieures de type languettes, lesquelles viennent en prise dans l'espace situé entre l'arrière de sacoche et l'élément de réception inférieur (3) lors du montage de la sacoche (100).

8. Système de fixation et/ou de blocage selon la revendication 1,
**caractérisé en ce que**
l'élément de fixation (1) est doté de deux points de dispositif de retenue supérieurs (7) de type champignon, lesquels pénètrent dans la fente (9) de l'élément de réception supérieur (2) sur la sacoche, lors du montage de la sacoche (100).

9. Système de fixation et/ou de blocage selon la revendication 1 et 8,
**caractérisé en ce que**
l'élément de réception supérieur (2) disposé dans la sacoche est doté d'un verrouillage détachable (8), lequel à l'état engagé du point de retenue en forme de champignon (7) dans la fente (9), évite le glissement hors de celui-ci.

10. Verrouillage d'un système de fixation et/ou de blocage selon la revendication 9,
**caractérisé en ce que**
le mécanisme de verrouillage est réalisé avec sollicitation de ressort.

11. Système de fixation et/ou de blocage selon la revendication 1, 9 et 10,
**caractérisé en ce que**
le verrouillage de l'élément de réception supérieur (3) est doté d'une poignée (10) pour défaire le verrouillage.

12. Système de fixation et/ou de blocage selon la revendication 1,
**caractérisé en ce que**
les éléments de liaison venant en prise autour de l'élément tubulaire sont constitués sous la forme d'éléments en collier (5) avec un point correspondant pour la liaison au moyen du point de fixation (4) de l'élément de fixation (1).

13. Système de fixation et/ou de blocage selon la revendication 1 et 12,
**caractérisé en ce que**
l'élément de fixation (1) est constitué sur son côté tourné vers l'élément à barre ou à tube (20) avec une cavité de réception (11) pour une tête de vissage ou de serrage de l'élément en collier (5).
